# EUROPEAN PATENT APPLICATION

(11) **EP 2 479 240 A1**
(43) Date of publication of application: **25.07.2012**
(21) Application number: 12151673.6
(22) Date of filing: 16.09.2008
(51) Int. Cl.: C10B 57/08, C10L 5/04, C10L 5/14, C10L 5/44, C10L 5/48, C10L 9/00

(54) **Methods and compositions for controlling bulk density of coking coal**

(30) Priority: 18.09.2007 US 857093
(62) Divisional of application: 08799561.9
(71) Applicant: Nalco Company, Naperville, IL 60563-1198 (US)
(72) Inventor: TRAN, Bo L., CHICAGO, IL Illinois 60614 (US); HAMNICK, Joseph, M., VIRGINIA BEACH, VA Virginia 23454 (US)
(74) Representative: Rivière, Sophie

(57) **Abstract**

A method of adjusting the bulk density of coking coal is provided, the method comprising applying to the coal an effective bulk density increasing amount of a treating composition comprising a fatty acid by-product of biodiesel manufacturing processes, the fatty acid by-product comprising water and fatty acids.

## Description

### CROSS REFERENCE TO RELATED APPLICATIONS

This is a continuation-in-part of Ser. No. 11/561,150, filed November 17, 2006 and a continuation-in-part of Ser. No. 11/490,193, filed July 20, 2006, which is a continuation-in-part of Ser. No. 10/846,218, filed May 14, 2004, now Patent No. 7,108,800.

### TECHNICAL FIELD

This invention relates to controlling the bulk density of coking coal. More particularly, this invention concerns compositions to control coal bulk density comprising liquid hydrocarbons derived from biomass. The biomass liquid hydrocarbons can include vegetable oils, animal fats, triglycerides, fatty acids, fatty acid methyl esters, fatty acid ethyl esters, and glycerin. The liquid hydrocarbon is applied on the coking coal to adjust the coal's bulk density.

### BACKGROUND OF THE INVENTION

Metallurgical coke is prepared by heating coal in an oxygen-free atmosphere until all the volatile components in the coal evaporate. Metallurgical coal is mainly used in the iron and steel industry as fuel for blast furnaces, sinter plants, and foundries to reduce iron ore to iron.

The coking of coal occurs in coke ovens without contact with air in ovens that are designed to operate at optimum wall pressure. During operation the oven is subjected to cyclic stress of expansion and contraction. It is essential that the bulk density of coal is measured and controlled to prevent excessive pressure within the ovens and to run the ovens at optimum capacity.

Raw coking coals rarely possess the requisite bulk density, primarily due to the presence of surface moisture on the coal -. Surface moisture decreases the bulk density of formerly dry coking coal. In order to bring the bulk density of coking coal up to a desired value, a widely used procedure is to apply diesel fuel to the coal. The fuel increases the coal's bulk density and thereby controls expansion that can damage the oven.

There are several disadvantages to using diesel fuel. Diesel fuel is derived from petroleum hydrocarbons and emits pollutants during the coking process. Its cost has also escalated recently. It is therefore desirable to identify compositions for adjusting the bulk density of coal that are derived from renewable sources, that emit less pollution, are less hazardous to human health and the environment, and are cost effective.

### SUMMARY OF THE INVENTION

This invention concerns methods and compositions to control the bulk density of coking coal.

In an embodiment, this invention is a method of adjusting the bulk density of coking coal comprising applying to the coal an effective bulk density increasing amount of a treating composition comprising about 10 to about 99 weight percent of one or more components selected from a group consisting of vegetable oils, animal fats, triglycerides, fatty acids, fatty acid methyl esters, fatty acid ethyl esters, and glycerin.

Compositions according to this invention can be used in place of diesel fuel or contain substantially reduced amounts of diesel fuel. The compositions are derived from renewable resources and comprise green chemistries. The compositions can comprise by-products of biodiesel manufacturing processes and of soap and detergent manufacturing processes. This makes using them cost effective.

Moreover, pollutant emissions, including total unburned hydrocarbons, carbon monoxide, particulate, sulfates, polyaromatic hydrocarbons (PAH), and nitrated PAH, may be lower than when diesel fuel is used to adjust the bulk density during the coking process.

The present invention can be of further benefit in that the compositions can reduce moisture content of the coal consequently, improving its through put characteristics.

### DETAILED DESCRIPTION OF THE INVENTION

This invention uses treating compositions comprising biomass liquids such as vegetable oils, animal fats, triglycerides, fatty acids, fatty acid methyl esters, fatty acid ethyl esters, and glycerin. The vegetable oils, animal fats, triglycerides, fatty acids, fatty acid methyl esters, fatty acid ethyl esters, and glycerin described herein are "green", i.e., non-hazardous, non-toxic, biodegradable, environmentally friendly, and derived from renewable sources.

As used herein,"Triglycerides" refer to esters of glycerol, a trihydric alcohol, with different fatty acids of varying molecular weigh associated with a particular oil or fat. Triglycerides are the principle components of fats, tallow oil, yellow grease, and/or vegetable oils. The most common fatty acids sourced from natural fats and oils include palmitic, stearic and linoleic acid.

"Fatty acids" means carboxylic acids derived from or contained in an animal or vegetable fat or oil. Fatty acids comprise a terminal COOH group and a long chain saturated or unsaturated alkyl chain. Representative fatty acids include butyric acid, lauric acid, palmitic acid, stearic acid, oleic acid, linoleic acid, linolenic acid, and the like.

"Glycerin" and "glycerol" means 1,2,3-propanetriol.

Glycerin, fatty acids, fatty acid methyl esters, and/or fatty acid ethyl esters can be derived as by-products from transesterification reactions involving triglycerides including transesterification reactions involving biodiesel manufacturing processes as described herein.

"Methyl esters" or ethyl esters" means the - esters of fatty acids as described herein.

"Vegetable oil" means triglycerides extracted from the seeds, fruit or leaves of plants including com oil, soybean oil, canola oil, palm oil, coconut oil, rapeseed oil, and the like.

"Diesel fuel" includes fuel oil #1 and fuel oil #2 and the like.

"Transesterification reactions involving triglycerides" refers to the splitting of triglyceride esters derived from vegetable oils and/or animal fats in the presence of base and a monohydroxy alcohol such as methanol or ethanol to produce monoesters of the fatty acids comprising the original triglycerides.

"Surfactant" is any substance used to lower the surface tension of another substance. In an embodiment the present invention is used with a surfactant to improve the coal bulk density and to improve the flow characteristic of coal.

In an embodiment, the methyl esters, ethyl esters, glycerin and fatty acids are derived from transesterification reactions involving triglycerides.

Representative fats and oils used in the transesterification reactions described herein include tallow, crude tall oil, virgin vegetable oils, soy, mustard, canola, coconut, rapeseed, palm, poultry offal, fish oils, yellow grease, used cooking oils, and/or trap grease, and the like.

In an embodiment, the glycerin, fatty acids, ethyl esters and methyl esters are derived from a biodiesel manufacturing process.

Biodiesel is a cleaner-burning diesel replacement fuel made from natural, renewable sources. For example, biodiesel can include fatty acid alkyl esters used as a cleaner-burning diesel replacement fuel made from sources such as new and used vegetable oils and animal fats.

According to the American Fuel Data Center of the U.S. Department of Energy, approximately 55% of the biodiesel is currently produced from recycled fat or oil feedstock, including recycled cooking grease. The other half of the industry is limited to vegetable oils, the least expensive of which is soy oil. The soy industry has been the driving force behind biodiesel commercialization because of excess production capacity, product surpluses, and declining prices. Similar issues apply to the recycled grease and animal fats industry, even though these feedstocks are less expensive than soy oils. Based on the combined resources of both industries, there is enough of the feedstock to supply 1.9 billion gallons of biodiesel.

Biodiesel is typically made through a chemical process called transesterification in which vegetable oil or animal fats are converted to fatty acid alkyl esters and glycerin by-products. Fatty acids and fatty acid alkyl esters can be produced from oils and fats by base-catalyzed transesterification of the oil, direct acid-catalyzed esterification of the oil and conversion of the oil to fatty acids and subsequent esterification to biodiesel.

The majority of fatty acid alkyl esters are produced by the base-catalyzed method. In general, any base may be used as the catalyst used for transesterification of the oil to produce biodiesel, however sodium hydroxide or potassium hydroxide are used in most commercial processes.

In the biodiesel manufacturing process, the oils and fats can be filtered and preprocessed to remove water and contaminants. If free fatty acids are present, they can be removed or transformed into biodiesel using special pretreatment technologies, such as acid catalyzed esterification. The pretreated oils and fats can then be mixed with an alcohol and a catalyst (e.g. base). The base used for the reaction is typically sodium hydroxide or potassium hydroxide, being dissolved in the alcohol used (typically ethanol or methanol) to form the corresponding alkoxide, with standard agitation or mixing. It should be appreciated that any suitable base can be used. The alkoxide may then be charged into a closed reaction vessel and the oils and fats are added. The system can then be closed, and held at about 71 °C (160 °F) for a period of about 1 to 8 hours, although some systems recommend that the reactions take place at room temperature.

Once the reactions are complete the oil molecules (e.g. triglycerides) are hydrolyzed and two major products are produced: 1) a crude fatty acid alkyl esters phase (i.e. biodiesel phase) and 2) a glycerin by-product phase. Typically, the crude fatty acid alkyl esters phase forms a layer on top of the denser glycerin by-product phase. Because the glycerin by-product phase is denser than the biodiesel phase, the two can be gravity separated. For example, the glycerin by-product phase can be simply drawn off the bottom of a settling vessel. In some cases, a centrifuge may be employed to speed the separation of the two phases.

The glycerin by-product phase typically consists of a mixture of glycerin, methyl esters, methanol, mong and inorganic salts and water. Mong is "matiere organique non glycerol". Mong normally consists of soaps, free fatty acids, and other impurities. Methyl esters or ethyl esters are typically present in an amount of about 0.01 to about 5 percent by weight.

Methanol can be present in the glycerin by-product in an amount from about 0.1 weight percent to about 35 weight percent.

The glycerin-containing by-product may comprise about 30 to about 95 weight percent of glycerin. In certain instances, it may be necessary to further refine the glycerin by-product prior to use, for example by washing, acidulation or distillation to adjust the glycerin concentration and/or remove impurities.

The fatty acid by-products can originate from the refining of the crude fatty acid alkyl esters phase and/or the crude glycerin phase during the biodiesel manufacturing process. For example, the crude fatty acid alkyl esters phase typically includes a mixture of fatty acid alkyl esters, water and a fatty acid salts component. These fatty acid salts component generally form a solution with the water phase (e.g. soap water) where they can be further separated from the fatty acid alkyl esters component. Once separated from the fatty acid alkyl esters component, any suitable acid such as, for example, hydrochloric acid can be added to the water phase containing the fatty acid salts component to produce the fatty acid by-products of the present invention.

The fatty acid by-product may be in a wax or solid form. It can also contain fatty acid esters. The esters are beneficial components of this invention. The methyl esters or ethyl esters are sometime concentrated through further processing, including washing or distilling. The methyl or ethyl ester by-products can contain other components, including triglycerides, diglycerides, monoglycerides, sterol, fatty acids, tocopherol, and other impurities.

Similarly, the crude glycerin phase typically includes a mixture of glycerin, water and a fatty acid salts component. This fatty acid salts component forms a solution or suspension with the water phase where it can be further separated from the glycerin component by adding any suitable acid to recover the fatty acid by-products suitable for the present invention.

It should be appreciated that the fatty acid by-products of the present invention can be derived from the acidulation of any of the biodiesel manufacturing process streams/stages that contain the fatty acid salts component (e.g. soap water) including, for example, the wash water. These fatty acid by-products derived from any of the different stages/streams of the biodiesel manufacturing process can be used as compositions to adjust the bulk density of coal.

Coke production from coal occurs in ovens absence of air. These ovens are airtight while in operation and are subjected to cyclic stress of expansion and contraction. Each oven consists of three areas: coking chambers, heating chambers, and regenerative chambers. All the chambers are lined with refractory brick. The coking chambers have ports on the top for charging the coal.

Coke manufacturing consists of preparing, charging, and heating the coal; removing and cooling the coke product; and cooling, cleaning, and recycling the oven gas. Approximately 40 percent of cleaned oven gas (after the removal of its by-products) is used to heat the coke ovens.

Preparation of the coal for coking involves pulverization to induce transfer through a 3.2 millimeter screen. Several types of coal can be blended to produce the desired properties, or to control expansion of the coal mixture in the oven. Water or oil, including diesel fuel, may be added to the coal to adjust its density. The purpose is to control expansion, preventing damage to the oven.

Coal is added to the ovens dry or wet. Wall temperatures are about 2000 degree F during loading and actual coking. The ports are closed after the coal is charged, and the coal is heated for about 12 to 20 hours.

Air pollutants including particulates, volatile organic compounds, carbon monoxide, and other compounds are emitted from the different coking operation, i.e., coal preparation, coal preheating, coal charging, oven leakage, coke removal, hot coke quenching, and combustion stacks.

This invention uses novel treating compositions comprising biomass liquids derived from renewable resources to adjust the bulk density of coal. In comparison to using diesel fuel to adjust the density of coal, the invention uses compositions that are green, emit less pollutants, and are cost-effective.

In an embodiment, the treating composition comprises one or more fatty acid methyl esters, fatty acid ethyl esters or a combination thereof for adjusting the bulk density of coal.

As discussed above, fatty acid methyl and ethyl esters are also known as biodiesel, and have been used to replace diesel fuel for use in vehicle engines and in boilers. Emissions from these applications are reportedly less when biodiesel is used in place of diesel fuel. The National Biodiesel Board reports reduction of total unburned hydrocarbons by 67%, reduction of carbon monoxide by 48%, reduction of particulate matter by 47%, reduction of sulfates by 100%, reduction of polyaromatic hydrocarbons by 80%, reduction of nitrated PAHs by 90%, and reduction of ozone potential of speciated hydrocarbon by 50%.

In an embodiment, the treating composition comprises from about 30 to about 99 weight percent fatty acid methyl esters, fatty acid ethyl esters or a combination thereof.

In an embodiment, the treating composition comprises about 40 to about 85 weight percent of fatty acid methyl esters, about 3 to about 50 weight percent fatty acids, about 0.5 to about 5 weight percent tocopherols, and about 0.5 to about 5 weight percent of sterols.

In an embodiment, the treating composition comprises from about 10 to about 99 weight percent glycerin.

In an embodiment, the treating composition comprises about 95 to about 99 weight percent of glycerin, about 0.05 to about 1 weight percent methanol, and about 0.05 to about 1 weight percent water.

In an embodiment, the treating composition further comprises diesel fuel.

In an embodiment, the treating composition comprises about 30 to about 70 weight percent diesel fuel.

As noted above, diesel fuel can be applied to coal to adjust the coal bulk density and compensate for surface moisture on the coal. Accordingly, in an embodiment, the treating composition further comprises diesel fuel.

In an embodiment, the treating composition comprises about 30 percent by weight to about 70 percent by weight diesel fuel.

In an embodiment, the treating composition comprises about 30 to about 99.9 weight percent fatty acid methyl esters and about 0.1 to about 70 weight percent diesel fuel.

One or more surfactants may be added to the treating composition in order to increase the spreading coefficient of the components. Surfactants may be oil soluble or water soluble depending whether the treating composition is aqueous or nonaqueous. Representative surfactants including long chain primary and secondary alcohols, linear alcohols, akylaryl sulfonates and mixtures thereof should be used for nonaqueous treating compositions.

In cases where an oil-soluble surfactant is used, one or more C₁-C₈ alcohols may advantageously be included in the treating composition. Representative C₁-C₈ alcohols include methanol, ethanol, isopropanol, octanol, and the like. For a detailed discussion of suitable surfactants and alcohols see Patent No. 4,304,636, incorporated herein by reference.

In an embodiment, the treating composition comprises about 5 to about 30 weight percent surfactants, about 70 to about 95 weight percent fatty acid methyl esters and about 0.1 to about 25 weight percent diesel fuel.

The treating composition may be sprayed, poured, or otherwise applied to the coal at any stage before the coal is placed in the coking oven.

The amount of treating composition required per ton of coal to achieve the desired increase in bulk density can be empirically determined by one of skill in the art taking into consideration the type of coal being treated and its surface moisture content. In an embodiment about 1 to about 20 pints of said treating composition per ton of coal is applied to the coal.

The foregoing may be better understood by reference to the following example, which is presented for purposes of illustration and are not intended to limit the scope of the invention.

### Example: Adjustment of Coal Bulk Density

Crude glycerin solution is obtained from a biodiesel synthesis process. In this embodiment, the crude glycerin component comprises about 80 weight percent of glycerin, about 10-11 weight percent of water, about 7 weight percent of sodium chloride, and about 1-2 weight percent of fatty acids and methyl esters thereof. The product is diluted with 42 weight percent of water to provide a 58 weight percent solution of the crude glycerin byproduct. The composition is applied to coal at 2 pints per ton (ppt). Two samples were created: one with the treated coal; and one without the glycerin treatment. No. 2 fuel oil was then added to both samples at identical oil concentration. At the oil concentration range of 4 ppt, the sample treated with glycerin exhibited a higher bulk density of about 11b per cubic foot.

Changes can be made in the composition, operation, and arrangement of the method of the invention described herein without departing from the concept and scope of the invention as defined in the claims.

## Claims

1. A method of adjusting the bulk density of coking coal comprising applying to the coal an effective bulk density increasing amount of a treating composition comprising a fatty acid by-product of biodiesel manufacturing processes, the fatty acid by-product comprising water and fatty acids.

2. The method of claim 1, wherein 473 to 9463 mL (1 to 20 pints) of said treating composition per ton of coal is applied to the coal.

3. The method of claim 1 or claim 2, wherein said fatty acid by-product further comprises one or more components selected from the group consisting of fatty acid methyl esters, fatty acid ethyl esters, triglycerides, diglycerides, monoglycerides, sterol and tocopherol.

4. The method of claim 3, wherein said fatty acid by-product comprises from 30 to 99 weight percent fatty acid methyl esters, fatty acid ethyl esters or a combination thereof.

5. The method of claim 4, wherein said fatty acid by-product comprises 40 to 85 weight percent of fatty acid methyl esters, 3 to 50 weight percent fatty acids, 0.5 to 5 weight percent tocopherols, and 0.5 to 5 weight percent of sterols.

6. The method of any of the preceding claims, wherein said treating composition further comprises 30 to 70 weight percent diesel fuel.

7. The method of any of the preceding claims, wherein said treating composition further contains one or more surfactants.

8. The method of claim 7, wherein said surfactant is an oil-soluble surfactant and wherein said treating composition further comprises one or more C₁-C₈ alcohols.
